**Europäisches Patentamt**

**European Patent Office**

**Office européen des brevets**

(11) Veröffentlichungsnummer: **0 153 612**
**B1**

(12) **EUROPÄISCHE PATENTSCHRIFT**

(45) Veröffentlichungstag der Patentschrift:
**20.04.88**

(21) Anmeldenummer: **85101139.5**

(22) Anmeldetag: **04.02.85**

(51) Int. Cl.⁴: **F 16 H 47/04**, H 02 K 7/18

(54) Antriebseinrichtung mit variabler Gesamtübersetzung und Langsam-Dreheinrichtung.

(30) Priorität: **01.03.84 CH 999/84**

(43) Veröffentlichungstag der Anmeldung:
**04.09.85 Patentblatt 85/36**

(45) Bekanntmachung des Hinweises auf die Patenterteilung:
**20.04.88 Patentblatt 88/16**

(84) Benannte Vertragsstaaten:
**CH DE GB IT LI**

(56) Entgegenhaltungen:
**EP - A - 0 101 358**
**DE - A - 3 239 853**
**GB - A - 1 329 281**

**A. Palmgren: "Ball and roller bearing engineering", SKF Industries Inc., Philadelphia, Pa., US, Seite 218**

(73) Patentinhaber: **Schweizerische Lokomotiv- und Maschinenfabrik, CH-8401 Winterthur (CH)**

(72) Erfinder: **Meier, Bruno, Im Geissacker 10, CH-8404 Winterthur (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

## Beschreibung

Die Erfindung betrifft eine Antriebseinrichtung mit variabler Gesamtübersetzung, insbesondere zum Antrieb eines Generators von einem Dieselmotor aus, welche ein Überlagerungsgetriebe mit einem Leistungspfad mit konstanter Übersetzung und einem Leistungspfad mit variabler Übersetzung aufweist, wobei ein die Leistungen der genannten Leistungspfade zusammenführendes oder aufteilendes Umlaufgetriebe vorgesehen ist, und das Überlagerungsgetriebe als Leistungspfad mit variabler Übersetzung ein Hydrostatikgetriebe aufweist, welches zwei in einem hydraulischen Kreislauf angeordnete Pumpe/Motor-Einheiten enthält.

Eine aus der DE-OS 3 239 853 bekannte Antriebseinrichtung der genannten Art ist einem als Hauptantriebsmaschine dienenden Schiffsdieselmotor zugeordnet, welcher einerseits einen Antriebspropeller und andererseits – über das Überlagerungsgetriebe – einen Wechselstromgenerator antreibt, der seinen Strom an das Bordnetz abgibt.

Es sind auch Antriebseinrichtungen dieser Art bekannt, bei denen das Überlagerungsgetriebe je nach Bedarf mit der Antriebsmaschine gekuppelt oder ausgekuppelt werden kann. Bei stillstehendem Überlagerungsgetriebe und laufendem Dieselmotor sind jedoch die Wälzlager des Überlagerungsgetriebes durch die beim Betrieb des Dieselmotors auftretenden starken Vibrationen gefährdet, da die Laufbahnen der Wälzlager durch Hämmern des Wälzkörpers rasch zerstört werden können. Eine Abhilfemassnahme besteht darin, das Überlagerungsgetriebe durch eine an sich bekannte Dreheinrichtung auch in ausgekuppeltem Zustand in langsame Drehung zu versetzen, so dass die relative Lage der Rollen und Laufbahnen sich dauernd ändert. Hierfür ist jedoch bisher ein komplizierter Hilfsantrieb nötig, welcher nicht nur entsprechende zusätzliche Kosten verursacht, sondern auch erheblichen Platz beansprucht.

Aufgabe der Erfindung ist es, eine insbesondere in dieser Hinsicht verbesserte Antriebseinrichtung zu schaffen und diese so zu gestalten, dass die erforderliche Langsamdrehung wesentlich einfacher als bisher bewirkt werden kann.

Diese Aufgabe wird erfindungsgemäss dadurch gelöst, dass das Überlagerungsgetriebe vom Dieselmotor entkuppelbar ist, dss der hydraulische Kreislauf mit einer zumindest bei entkuppeltem Überlagerungsgetriebe zuschaltbaren, zum Zuführen von hydraulischem Druckmittel bestimmten zusätzlichen Pumpeinheit in Verbindung steht, die an einen zur gemeinsamen Beaufschlagung der beiden Pump/Motor-Einheiten geeigneten ersten Abschnitt des Kreislaufs angeschlossen ist, und dass ein den beiden Pump/Motor-Einheiten in Strömungsrichtung des zugeführten Druckmittels nachgeschalteter zweiter Abschnitt dieses Kreislaufs an wenigstens ein Ventil angeschlossen ist, welches zwischen einer ein Abfliessen des Druckmittels aus dem Kreislauf verhindernden ersten Betriebsstellung und einer ein Abfliessen des Druckmittels zulassenden zweiten Betriebsstellung verstellbar ist, die bei entkuppeltem Überlagerungsgetriebe einen gleichzeitigen Motorbetrieb der beiden über die zusätzliche Pumpeinheit antreibbaren Pump/Motor-Einheiten gewährleistet.

Da zusätzliche Pumpeinheiten für Speise- oder Spülzwecke ohnehin meistens schon vorhanden sind, lässt sich die erforderliche Langsamdrehung im wesentlichen mit den bereits vorhandenen hydraulischen Getriebekomponenten erzielen, was entsprechende Kosten- und Platzeinsparungen ergibt.

Ein hydrostatisches Getriebe mit zwei Pump/Motor-Einheiten und einer zuschaltbaren zusätzlichen Pumpeinheit ist auch aus der EP-A-0 101 358 bekannt. Diese bekannte Anordnung dient jedoch lediglich zur Synchronisierung der Drehzahlen zweier mechanischer Getriebegänge, wobei jeweils nur eine der beiden Pump/Motor-Einheiten über die zusätzliche Pumpeinheit antreibbar ist. Die andere Pump/Motor-Einheit wird jeweils blockiert und von dem mit der zusätzlichen Pumpeinheit verbundenen Teil des Kreislaufs isoliert. Eine gemeinsame Beaufschlagung der beiden Pump/Motor-Einheiten im Sinne eines gleichzeitigen Motorbetriebes ist bei dieser bekannten Einrichtung nicht möglich.

Nach einer besonders vorteilhaften Ausführung der Erfindung können die Pump/Motor-Einheiten beim gleichzeitigen Motorbetrieb in Serie geschaltet sein. Dies ergibt eine besonders einfache hydraulische Schaltung der Antriebseinrichtung.

Die Pump/Motor-Einheiten können beim gleichzeitigen Motorbetrieb auch parallel geschaltet und miteinander kuppelbar sein, wobei zwischen den Pump/Motor-Einheiten eine Kupplung zu- bzw. abschaltbar sein kann. Hiebei ist ein gleichzeitiger Motorbetrieb der Pump/Motor-Einheiten mit vorbestimmtem Drehzahlverhältnis sichergestellt.

Das Ventil kann dabei als Umsteuer- und/oder Absperrventil ausgebildet sein. Dies ergibt den Vorteil, dass der Hydraulik-Kreislauf auf einfache Art je nach Bedarf auf Serie- oder Parallelbetrieb der Pump/Motor-Einheiten eingerichtet werden kann.

Weiter kann die Betätigung des Ventils und/oder der Regeleinrichtung wenigstens einer Pump/Motor-Einheit während des Betriebes der Antriebseinrichtung in Abhängigkeit des Betriebszustandes derselben erfolgen. Hierdurch lässt sich z.B. beim Auskuppeln der Antriebseinrichtung gleichzeitig eine Langsamdrehung herbeiführen, so dass jegliche Gefahr der Beschädigung der Wälzlager durch Hämmern vermieden wird.

Schliesslich kann eine einkuppelbare Zahnradverbindung zwischen zwei beliebigen Getriebestellen der Antriebseinrichtung vorgesehen sein. Hierdurch lässt sich der Aufbau der Antriebseinrichtung optimal vereinfachen.

Die nähere Erläuterung der Erfindung erfolgt anhand Ausführungsbeispielen in Verbindung mit nachstehender Zeichnung. Es zeigen:

Fig. 1 eine erste Ausführungsform der erfindungsgemässen Antriebseinrichtung mit den Pump/Motor-Einheiten in Serieschaltung und

Fig. 2 eine zweite Ausführungsform der Erfindung mit den Pump/Motor-Einheiten in Parallelschaltung.

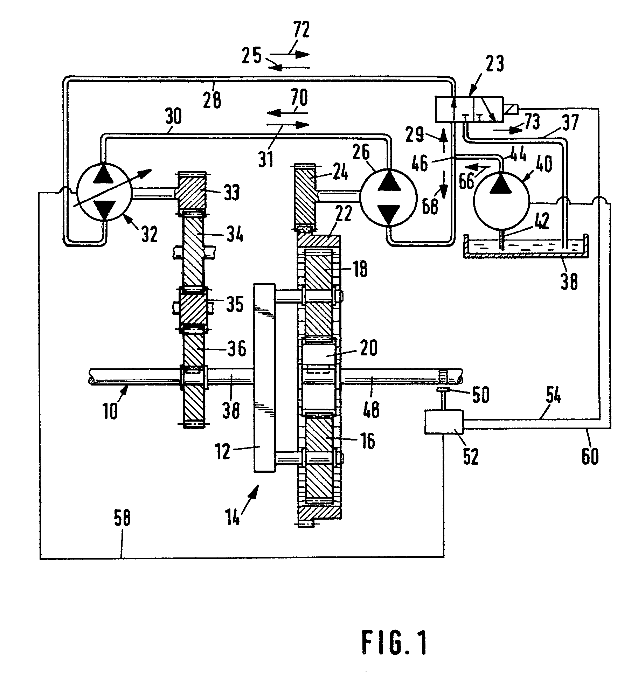

Eine z.B. mit einem Schiffsdieselmotor über eine nicht dargestellte Kupplung verbundene Hauptwelle 10 (Fig. 1) ist mit dem Steg 12 eines Umlaufgetriebes 14 verbunden, mit Planetenrädern 16, 18, welche einerseits mit einem Sonnenrad 20 und anderseits mit einem Hohlrad 22 im Eingriff stehen. Dieses steht über ein Ritzel 24 mit einer fixen, somit konstante Durchflussmenge pro Umdrehung aufweisenden hydrostatischen Pump/Motor-Einheit 26 in Verbindung, welche über die Ölleitungen 28, 30 mit einer Pump/Motor-Einheit 32, deren Durchflussmenge verstellbar ist, in Verbindung steht. Die verstellbare Pump/Motor-Einheit 32 steht über die Zahnräder 33, 34, 35, 36 mit der Hauptwelle 10 in Verbindung.

Der bisher beschriebene Teil der Antriebseinrichtung stellt ein Überlagerungsgetriebe bekannter Art dar, wobei der zwischen dem Zahnrad 36 und dem Steg 12 befindliche Teil 38 der Hauptwelle zusammen mit dem Steg 12 den Leistungspfad mit konstanter Übersetzung bildet, während das Hydrostatikgetriebe 32, 26, 28, 30 den Leistungspfad mit variabler Übersetzung bildet.

Zwischen den Pump/Motor-Einheiten 26, 32 ist in der Leitung 28 ein Absperr- und Umsteuerventil 23 angeordnet, dessen Abflussleitung 37 in einen Tank 38 für Hydraulikflüssigkeit mündet. Eine z.B. für Speise- oder Spülzwecke vorhandene Pump-Einheit 40 kann die Hydraulikflüssigkeit mit einer Saugleitung 42 ansaugen und sie über die Druckleitung 44 an der Zweigstelle 46 durch das Ventil 23 in die Leitung 28 fördern. An der Abtriebswelle 48, welche mit dem Sonnenrad 20 des Umlaufgetriebes 14 gekuppelt ist, befindet sich ein Drehzahlfühler 50, welcher über eine Steuereinrichtung 52 und Signalleitungen 54, 58, 60 mit dem Ventil 23, der Regeleinrichtung der Pump/Motor-Einheit 32 und mit der Pump-Einheit 40 verbunden ist.

Für ein Betriebsbeispiel der beschriebenen Vorrichtung wird angenommen, dass der mit der Hauptwelle 10 über die nicht dargestellte Kupplung verbundene Schiffsdieselmotor eine Drehzahl aufweist, die in bestimmten Grenzen schwankt und dass mit der Abtriebswelle 48 ein Generator verbunden ist, dessen Drehzahl konstant gehalten werden soll. Das Ventil 23 ist dabei so betätigt worden, dass die Leitung 37 gesperrt ist, während die Pump-Einheit 40 abgeschaltet sein kann. Das Drehzahlverhältnis des Leistungspfades mit variabler Übersetzung, d.h. die verstellbare Pump/Motor-Einheit 32 und die fixe Pump/Motor-Einheit 26 ist normalerweise regelbar zwischen −1 und +1, im folgenden wird eine Regelung zwischen 0 und 1 angenommen. Die Antriebsleistung gelangt über die Hauptwelle 10 in das Getriebe. Ein Teil dieser Leistung wird zum Steg 12 des Planetengetriebes 14 geleitet, während ein anderer Teil der Leistung über die Zahnräder 36–34 zu der Pump/Motor-Einheit 32 geführt wird. In dieser Pump/Motor-Einheit wird z.B. ein Drucköelstrom erzeugt, der über die Leitung 30 gemäss Pfeil 31 zu der Pump/Motor-Einheit 26 geführt wird um nachher wieder drucklos über die Leitung 28 gemäss Pfeilen 29, 25 zur Pump/Motor-Einheit 32 zurückgeführt zu werden. Die Pump/Motor-Einheit 26 läuft dann mit einer veränderlichen Drehzahl je nach der Regelstellung der Pump/Motor-Einheit 32. Die Drehzahl der Pump/Motor-Einheit 26 wird über das Ritzel 24 zum Hohlrad 22 des Planetengetriebes 14 geführt. Aus der Drehzahl des Hohlrades 22 und des Stegs 12 wird in diesem Planetengetriebe 14 eine resultierende Drehzahl gebildet, die über die Welle 48 zum Generator weitergeleitet wird. Der bekannte Vorteil dieser Anordnung besteht darin, dass nur ein relativ kleiner Teil der zu übertragenden Leistung über den Zweig mit dem eigentlichen Regelgetriebe (Hydrostatikgetriebe) geführt werden muss, womit die Verluste der Antriebseinrichtung auf einem kleinen Wert gehalten werden können.

Falls nun die Antriebseinrichtung vom Schiffsdieselmotor entgekuppelt wird und im Langsamdrehzustand betrieben werden soll, so wird das Ventil 23 über das Steuergerät 52 und die Signalleitung 54 bei Stillstand der Welle 48 so betätigt, dass die Leitung 28 zwischen den Pump/Motor-Einheiten 26, 32 gesperrt wird und statt dessen mit der Abflussleitung 37 verbunden ist. Gleichzeitig werden über die Signalleitungen 58, 60 die Pump/Motor-Einheit 32 auf geeignete Regelstellung umgeschaltet und die Pump-Einheit 40 eingeschaltet. Der Durchfluss gemäss Pfeil 29 durch das Ventil 23 ist nun gesperrt und die Hydraulikflüssigkeit strömt von der Pump-Einheit 40 gemäss Pfeilen 66, 68, 70, 72 durch die im Motorbetrieb arbeitenden Pump/Motor-Einheiten 26, 32 und durch das Ventil 23 gemäss Pfeil 73 in den Tank 38 und zurück zur Pump-Einheit 40.

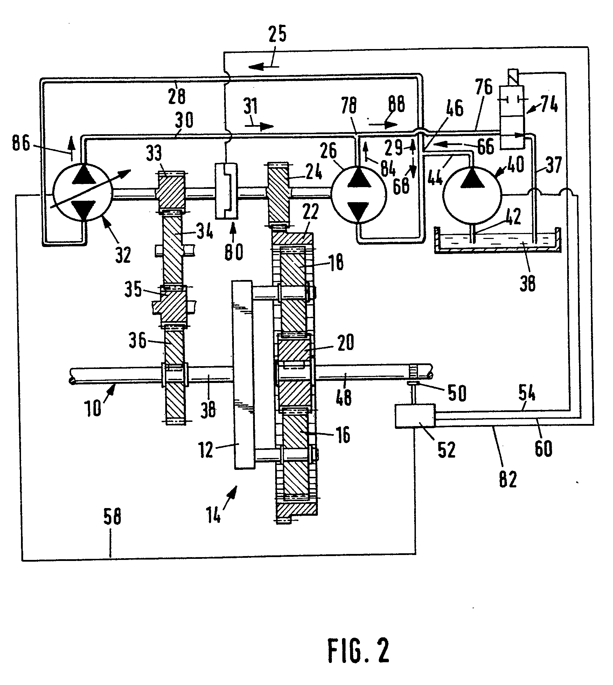

Beim Ausführungsbeispiel nach Fig. 2 ist statt des Absperr- und Umsteuerventils 23 ein Absperrventil 74 vorgesehen, welches über eine Leitung 76 mit der Leitung 30 an der Zweigstelle 78 verbunden ist. Zwischen den Zahnrädern 24, 33 befindet sich eine Schaltkupplung 80, welche über eine Signalleitung 82 mit dem Steuergerät 52 verbunden ist.

Beim normalen Betrieb der Antriebseinrichtung ist die Leitung 76 durch das Ventil 74 gesperrt. Soll hingegen auf Langsam-Drehbetrieb umgeschaltet werden, so wird über die Signalleitung 54 das Ventil 74 geöffnet, über die Signalleitung 58 die Pump/Motor-Einheit 32 in die passende Regelstellung gebracht und über die Signalleitung 60 die Pump-Einheit 40 eingeschaltet. Das von dieser geförderte Hydrauliköl verteilt sich nun an der Zweigstelle 46 und strömt einerseits gemäss den Pfeilen 68, 84 durch die Pump/Motor-Einheit 26 und anderseits gemäss den Pfeilen 29, 25, 86, 31 durch die Pump/Motor-Einheit 32. Die Flüssigkeitsströme vereinigen sich an der Zweigstelle 78 und der Gesamtstrom strömt gemäss Pfeil 88 über die Leitung 76, das Ventil 74 und den Tank 38 zurück zur Pump-Einheit 40. Durch die Kupplung 80 müssen die Pump/Motor-Einheiten mit einem vorbestimmten Drehzahlverhältnis laufen, womit die gewünschte Drehung sämtlicher Antriebselemente sichergestellt ist.

Es versteht sich, dass statt der Kupplung 80 auch z.B. ein Schiebezahnrad oder eine einkuppelbare Zahnradverbindung zwischen zwei beliebigen Getriebestellen der Antriebseinrichtung verwendet werden kann.

**Patentansprüche**

1. Antriebseinrichtung mit variabler Gesamtübersetzung, insbesondere zum Antrieb eines Generators von einem Dieselmotor aus, welche ein Überlagerungsgetriebe mit einem Leistungspfad mit konstanter Übersetzung und einem Leistungspfad mit variabler Übersetzung aufweist, wobei ein die Leistungen der genannten Leistungspfade zusammenführendes oder aufteilendes Umlaufgetriebe (14) vorgesehen ist, und das Überlagerungsgetriebe als Leistungspfad mit variabler Übersetzung ein Hydrostatikgetriebe aufweist, welches zwei in einem hydraulischen Kreislauf angeordnete Pump/Motor-Einheiten (26, 32) enthält, dadurch gekennzeichnet, dass das Überlagerungsgetriebe vom Dieselmotor entkuppelbar ist, dass der hydraulische Kreislauf mit einer zumindest bei entkuppeltem Überlagerungsgetriebe zuschaltbaren, zum Zuführen von hydraulischem Druckmittel bestimmten zusätzlichen Pumpeinheit (40) in Verbindung steht, die an einen zur gemeinsamen Beaufschlagung der beiden Pump/Motor-Einheiten (26, 32) geeigneten ersten Abschnitt (Leitung 29 in Fig. 1 bzw. Leitung 28 in Fig. 2) des Kreislaufs angeschlossen ist, und dass ein den beiden Pump/Motor-Einheiten (26, 32) in Strömungsrichtung des zugeführten Druckmittels nachgeschalteter zweiter Abschnitt dieses Kreislaufs (Leitungen 28 bzw. 30) an wenigstens ein Ventil (23 bzw. 74) angeschlossen ist, welches zwischen einer ein Abfliessen des Druckmittels aus dem Kreislauf verhindernden ersten Betriebsstellung und einer ein Abfliessen des Druckmittels zulassenden zweiten Betriebsstellung verstellbar ist, die bei entkuppeltem Überlagerungsgetriebe einen gleichzeitigen Motorbetrieb der beiden über die zusätzliche Pumpeinheit (40) antreibbaren Pump/Motor-Einheiten (26, 32) gewährleistet.

2. Antriebseinrichtung nach Anspruch 1, dadurch gekennzeichnet, dass die Pump/Motor-Einheiten (26, 32) beim gleichzeitigen Motorbetrieb in Serie geschaltet sind (Fig. 1).

3. Antriebseinrichtung nach Anspruch 1, dadurch gekennzeichnet, dass die Pump/Motor-Einheiten (26, 32) beim gleichzeitigen Motorbetrieb parallel geschaltet und miteinander kuppelbar sind (Fig. 2).

4. Antriebseinrichtung nach Anspruch 3, dadurch gekennzeichnet, dass zwischen den Pump/Motor-Einheiten (26, 32) eine Kupplung (80) zu- bzw. abschaltbar ist.

5. Antriebseinrichtung nach Anspruch 1, dadurch gekennzeichnet, dass das Ventil als Umsteuer- und/oder Absperrventil (23 bzw. 74) ausgebildet ist.

6. Antriebseinrichtung nach einem der Ansprüche 1 bis 3, gekennzeichnet durch Mittel (Steuergerät 52) zur Betätigung des Ventils und/oder einer Regeleinrichtung wenigstens einer Pump/Motor-Einheit (32) während des Betriebes der Antriebseinrichtung in Abhängigkeit des Betriebszustandes derselben.

7. Antriebseinrichtung nach Anspruch 3, dadurch gekennzeichnet, dass eine einkuppelbare Zahnradverbindung zwischen zwei beliebigen Getriebestellen der Antriebseinrichtung vorgesehen ist.

**Revendications**

1. Dispositif de transmission à rapport global variable, en particulier pour l'entraînement d'un générateur à partir d'un moteur diesel, qui comporte une transmission à superposition ayant un trajet de passage de la puissance à rapport fixe et un trajet de passage de la puissance à rapport variable, la transmission étant pourvue d'une transmission (14) par trains épicycloïdaux distribuant ou combinant les puissances des trajets de passage de puissance mentionnés, le trajet de passage de la puissance à rapport variable de la transmission à superposition étant réalisé sous forme d'une transmission hydrostatique qui comporte deux unités pompe-moteur (26, 32) disposées dans un circuit hydraulique, caractérisé par le fait que la transmission à superposition est débrayable du moteur diesel, que le circuit hydraulique est raccordé à une unité de pompe supplémentaire (40) destinée à assurer l'alimentation en fluide hydraulique sous pression et pouvant être actionnée au moins en cas de débrayage de la transmission à superposition, cette unité de pompe étant raccordée à une première partie (conduite 28) du circuit hydraulique permettant l'alimentation commune des deux unités pompe-moteur (26, 32), et qu'une deuxième partie (conduites 28 et 30) de ce circuit, placée, dans le sens de l'écoulement du fluide d'alimentation sous pression, en aval des unités pompe-moteur (26, 32), est raccordée à au moins une valve (23, 74) qui peut occuper une première position de fonctionnement interdisant l'échappement du fluide sous pression du circuit, ou une deuxième position de fonctionnement autorisant l'échappement du fluide sous pression du circuit, assurant, en cas de débrayage de la transmission à superposition, un fonctionnement moteur simultané des deux unités pompe-moteur (26, 32) alimentées par l'unité de pompe supplémentaire (40).

2. Dispositif de transmission selon la revendication 1, caractérisé par le fait que les unités pompe-moteur (26, 32) sont branchées en série, lors de leur fonctionnement simultané comme moteurs (figure 1).

3. Dispositif de transmission selon la revendication 1, caractérisé par le fait que les unités pompe-moteur (26, 32) sont branchées en parallèle, lors de leur fonctionnement simultané comme moteurs, et peuvent être couplées l'une à l'autre (figure 2).

4. Dispositif de transmission selon la revendication 3, caractérisé par le fait qu'un embrayage (80), disposé entre les unités pompe-moteur (26, 32), peut être embrayé ou débrayé.

5. Dispositif de transmission selon la revendication 1, caractérisé par le fait que la valve est réalisée sous forme d'une valve distributrice et/ou d'une valve d'arrêt (23 ou 74).

6. Dispositif de transmission selon une des revendications 1 à 3, caractérisé par un dispositif (boîtier 52 de commande) destiné à commander la valve et/ou par un dispositif destiné à régler au moins une unité pompe-moteur (32), lors du fonctionnement du dispositif de transmission, en fonction des conditions de fonctionnement de ce dernier.

7. Dispositif de transmission selon la revendication 3, caractérisé par le fait qu'un accouplement embrayable à denture est prévu entre deux éléments quelconques du dispositif de transmission.

## Claims

1. A drive system having a variable overall transmission ratio, more particularly for driving a generator from a diesel engine, the system having a power division transmission comprising a constant-ratio path and a variable-ratio path, an epicyclic transmission (14) combining or dividing the powers transmitted by way of the two paths, the variable-ratio path taking the form of a hydrostatic transmission having two pump-and-motor units (26, 32) in a hydraulic circuit, characterised in that the power division transmission is disengageable from the diesel engine, the hydraulic circuit communicates with an additional pump unit (40) which is adapted to be cut into operation at least when the power-division transmission is in the disengaged state and to supply hydraulic pressure medium, the additional pump unit being connected to a first part (line 25 in Fig. 1 and line 28 in Fig. 2, respectively) of the circuit, such part being suitable for supplying the two pump-and-motor units (26, 32) jointly, and a second part of the circuit (lines 28 and 30 respectively), such part being disposed after the said two units (26, 32) as considered in the direction of hydraulic medium flow, is connected to at least one valve (23, 24 respectively) which is adjustable between a first operative position, inhibiting the egress of pressure medium from the circuit, and a second operative position in which pressure medium can egress from the circuit and which ensures that, with the power-division transmission in the disengaged state, the two pump-and-motor units (26, 32) drivable by way of the additional pump unit motor simultaneously.

2. A system according to claim 1, characterised in that the pump-and-motor units (26, 32) are in series when simultaneously motoring (Fig. 1).

3. A system according to claim 1, characterised in that the pump-and-motor units (26, 32) are in parallel and adapted to be coupled together when simultaneously motoring (Fig. 2).

4. A system according to claim 3, characterised in that a coupling (80) can be engaged or released between the pump-and-motor units (26, 32).

5. A system according to claim 1, characterised in that the valve is a changeover and/or shutoff valve (23, 74 respectively).

6. A system according to any of claims 1 to 3, characterised by means (control device 52) for actuating the valve and/or a control facility of at least one pump-and-motor unit (32) during the operation of the drive system in dependence upon the operating condition thereof.

7. A system according to claim 3, characterised in that a geared connection is engageable between any two places in the transmission of the drive system.

FIG.1

FIG. 2